# EUROPÄISCHE PATENTANMELDUNG

(11) **EP 3 327 361 A1**
(43) Veröffentlichungstag der Anmeldung: **30.05.2018**
(21) Anmeldenummer: 16020470.7
(22) Anmeldetag: 28.11.2016
(51) Int. Cl.: F24D 15/04

(54) **HEIZKRAFTWERK UND VERFAHREN ZUM BETRIEB EINES SOLCHEN**

(71) Anmelder: International Solar Energy Research Center Konstanz E.V., 78467 Konstanz (DE)
(72) Erfinder: Peter, Kristian, 78467 Konstanz (DE); Reichenbach, Franz, 78462 Konstanz (DE); Minde, Adrian, 78464 Konstanz (DE); Glatz-Reichenbach, Joachim, 8274 Tägerwilen (CH)
(74) Vertreter: Heyerhoff Geiger & Partner Patentanwälte PartGmbB

(57) **Zusammenfassung**

Heizkraftwerk aufweisend ein Blockheizkraftwerk (30), eine Wärmepumpe (24) und einen Stromspeicher (18), in welchem der mittels des Blockheizkraftwerks (30) erzeugte Strom speicherbar ist, sowie Verfahren zum Betrieb eines Heizkraftwerks, bei welchem von einem Blockheizkraftwerk (30) an die Umgebung abgegebene Abwärme mit einer Temperatur von weniger als 40°C als Wärmequelle einem Verdampfer (41) einer Wärmepumpe (24) zugeführt wird.

## Beschreibung

Die Erfindung betrifft ein Heizkraftwerk gemäß dem Oberbegriff des Anspruchs 1 sowie ein Verfahren zum Betrieb eines Heizkraftwerks.

Blockheizkraftwerke sind in verschiedenen Varianten für sich genommen bekannt, ebenso Wärmepumpen. Üblicherweise werden Blockheizkraftwerke entweder wärmegeführt oder stromgeführt betrieben und erzeugen stets Wärme und Strom. Bei einem wärmegeführten Betrieb wird gerade so viel Wärme erzeugt, wie zum Beheizen des Gebäudes benötigt wird. Der zugleich anfallende elektrische Strom wird vorzugsweise im Gebäude verbraucht oder in ein externes Stromnetz eingespeist. Bei einem stromgeführten Betrieb hingegen wird gerade so viel Strom erzeugt wie aktuell im Gebäude benötigt wird. Die zugleich anfallende Wärme kann zwar genutzt werden, doch ist sie in den meisten Fällen zu groß oder zu gering.

Elektrisch betriebene Wärmepumpen können als Heizungs- oder Kühlanlagen eingesetzt werden. Für ihren Betrieb werden elektrischer Strom und Umgebungswärme aus der Luft oder dem Erdreich benötigt. Sofern die Wärmepumpe zur Kühlung eines Gebäudes eingesetzt wird, kann der benötigte Strom im Regelfall mittels photovoltaischer Anlagen regenerativ am Verbrauchsort oder in dessen Nähe erzeugt werden. Wird die Wärmepumpe zu Heizzwecken eingesetzt, so steht gerade in Zeiten erhöhten Heizbedarfs, also insbesondere in den Wintermonaten, häufig nicht genügend aus regenerativen Quellen lokal erzeugter Strom zur Verfügung.

Vor dem geschilderten Hintergrund liegt der vorliegenden Erfindung die Aufgabe zugrunde, ein Heizkraftwerk zur Verfügung zu stellen, welches flexibel und mit hohem Wirkungsgrad betrieben werden kann.

Diese Aufgabe wird gelöst durch ein Heizkraftwerk mit den Merkmalen des Anspruchs 1.

Weiterhin liegt der Erfindung die Aufgabe zugrunde, ein verbessertes Verfahren zum Betrieb eines Heizkraftwerks bereitzustellen.

Diese Aufgabe wird gelöst durch ein Verfahren mit den Merkmalen des nebengeordneten, unabhängigen Verfahrensanspruchs.

Vorteilhafte Weiterbildungen sind jeweils Gegenstand abhängiger Unteransprüche.

Das erfindungsgemäße Heizkraftwerk weist ein Blockheizkraftwerk sowie eine Wärmepumpe auf. Ferner ist ein Stromspeicher vorgesehen, in welchem der mittels des Blockheizkraftwerks erzeugte Strom speicherbar ist.

Mit einem solchen Heizkraftwerk kann jederzeit sofort Energie in Form von elektrischem Strom oder Wärme bereitgestellt werden. Die Bereitstellung von Strom und Wärme kann dabei jeweils genau entsprechend dem aktuellen Bedarf erfolgen. Infolgedessen ermöglicht es das erfindungsgemäße Heizkraftwerk, am Regelenergiemarkt teilzunehmen. Im Winter bedeutet dies, dass man bei Wärmebedarf entscheiden kann, ob Strom aus einem externen Netz bezogen wird und Wärme mittels der Wärmepumpe bereitgestellt wird oder ob mittels des Blockheizkraftwerks die benötigte Wärmemenge erzeugt und der parallel generierte Strom in ein externes Netz eingespeist wird. Dem Strombezug aus einem externen Netz würde man dabei Vorrang einräumen, wenn niedrige oder sogar negative Strompreise aufgerufen werden, also ein Überangebot an elektrischem Strom in dem externen Netz vorliegt. Im Sommer können zudem mittels des Stromspeichers Lastspitzen ausgeglichen werden.

Eine weitgehende bis hin zur vollständigen Autarkie von Energieverteilungsnetzen kann vergleichsweise aufwandsgünstig realisiert werden, sodass derartige Heizkraftwerke vorteilhaft als Insellösungen eingesetzt werden können. Bei Wärmepumpenheizanlagen werden bislang häufig Spitzenlastwärmeerzeuger, im Regelfall elektrische Heizstäbe oder kleinere Brenner, vorgesehen, um auch in Spitzenlastzeiten die benötigte Wärmemenge bereitstellen zu können. Bei dem erfindungsgemäßen Heizkraftwerk können diese Spitzenlastwärmeerzeuger entfallen, da die vorhandenen Wärmeerzeuger parallel betrieben werden können.

Das erfindungsgemäße Heizkraftwerk bietet eine erhöhte Betriebssicherheit aufgrund von Redundanzeffekten. So kann bei Ausfall von entweder Wärmepumpe oder Blockheizkraftwerk weiterhin Wärme und Strom bereitgestellt werden und die Zeit bis zur Problemlösung überbrückt werden.

Als Stromspeicher kann insbesondere ein Stromspeicher eines Elektrofahrzeugs vorgesehen sein. Bevorzugt ist ein solcher Stromspeicher eines Elektrofahrzeugs als zusätzlicher Stromspeicher vorgesehen, um auch bei Abwesenheit des Elektrofahrzeugs eine hinreichende Flexibilität zu gewährleisten. Dient der Stromspeicher eines Elektrofahrzeugs als zusätzlicher Stromspeicher, kann die Kapazität des stationären Stromspeichers geringer ausgelegt werden. Eine Ladeleistung für den Stromspeicher des Elektrofahrzeugs kann stufenlos vorgegeben werden.

In dem Blockheizkraftwerk kann als Verbrennungsmotor ein Sterlingmotor vorgesehen werden. Dieser bietet eine große Flexibilität hinsichtlich der Brennstoffwahl. Vorzugsweise sind der Verbrennungsmotor und ein Kompressor der Wärmepumpe in einer reversiblen Sterling-Maschine integriert.

Besonders bevorzugt sind der Verbrennungsmotor des Blockheizkraftwerks und der Kompressor der Wärmepumpe als Linearmaschinen ausgeführt, insbesondere als gekoppelte Freikolben-Lineareinheit. Diese kann als Lineargenerator oder als Linearmotor betrieben werden. Alle beweglichen Teile hierin sind lineare Bauteile, sodass für Linearmaschinen bekannte Vorteile genutzt werden können.

Alternativ kann anstelle eines Verbrennungsmotors eine Brennstoffzellenvorrichtung vorgesehen sein. Dies hat sich insbesondere im Betrieb des Heizkraftwerks mit Wasserstoff als Energieträger als vorteilhaft erwiesen. Die Brennstoffzellenvorrichtung kann grundsätzlich reversibel als Elektrolyseur eingesetzt werden.

Das erfindungsgemäße Heizkraftwerk ist flexibel und aufwandsgünstig an geänderte Nutzeranforderungen anpassbar. Hierfür bestehen vielfältige Optionen. Insbesondere kann der Stromspeicher vergrößert oder in der Wärmepumpe ein anderer Kompressortyp verbaut werden. Alternativ kann in dem Motor des Blockheizkraftwerks dessen Drehzahl angepasst, beispielsweise erhöht, werden. Eine einfache Erweiterbarkeit ist somit gegeben. Zudem kann mittels der Wärmepumpe im Bedarfsfall, insbesondere im Sommer, gekühlt werden.

Vorteilhafterweise ist ein Wechselrichter vorgesehen, über welchen das Heizkraftwerk mit einem internen Stromnetz und/oder einem externen Stromnetz verbindbar ist. Der Begriff des externen Stromnetzes bezeichnet dabei ein gebäudeübergreifendes Versorgernetz eines Energieversorgers, während es sich bei einem internen Stromnetz um ein gebäudeinternes Stromnetz handelt. In diesem Fall kann die Anbindung des Blockheizkraftwerks und genauer dessen Stromgenerators an das externe oder interne Stromnetz über den Wechselrichter erfolgen. Eine aufwändige Netzsynchronisierung des Blockheizkraftwerks kann infolgedessen entfallen.

Bei einer vorteilhaften Ausführungsvariante ist ein Verdampfer der Wärmepumpe thermisch an eine Umgebungsluft des Heizkraftwerks gekoppelt, sodass von dem Blockheizkraftwerk an die Umgebungsluft abgeführte Abwärme des Blockheizkraftwerks als Wärmequelle für die Wärmepumpe nutzbar ist. Die Wärmepumpe ist in diesem Fall bevorzugt in demselben Raum wie das Blockheizkraftwerk angeordnet. Geräuschentwicklungen, wie sie bei bislang üblichen, im Außenbereich angeordneten Luft-Wasser-Wärmepumpen entstehen, entfallen somit.

Vorteilhafterweise ist die Wärmepumpe in vertikaler Richtung über dem Blockheizkraftwerk angeordnet. Auf diese Weise kann die von dem Blockheizkraftwerk an die Umgebungsluft abgeführte Abwärme effizient dem Verdampfer der Wärmepumpe zugeführt werden.

Bei einer vorteilhaften Ausführungsvariante ist eine zusätzliche Stromerzeugungsvorrichtung vorgesehen, welche mit dem Wechselrichter verbunden ist. Hierbei kann es sich beispielsweise um eine Photovoltaikanlage, eine Windkraftanlage oder eine Wasserkraftanlage handeln. Vorzugsweise ist eine Photovoltaikanlage als zusätzliche Stromerzeugungsvorrichtung vorgesehen. Auf diese Weise kann die erforderliche Jahreslaufleistung des Blockheizkraftwerks deutlich reduziert werden, typischerweise auf 1.000 bis 2.000 Betriebsstunden. Infolgedessen kann ein einfacherer und günstigerer Gasmotor verwendet werden, was sich vorteilhaft auf den für das Heizkraftwerk erforderlichen Fertigungsaufwand auswirkt. Die Photovoltaikanlage ist als Komponente des erfindungsgemäßen Heizkraftwerks ebenfalls einfach erweiterbar und an geänderte Nutzerbedürfnisse anpassbar, beispielsweise durch Installation einer Photovoltaikanlage mit größerer oder zusätzlicher Leistung.

Vorzugsweise ist der mittels der zusätzlichen Stromerzeugungsvorrichtung erzeugte Strom in dem Stromspeicher speicherbar. Auf diese Weise ergibt sich die größtmögliche Flexibilität für den Betrieb des Heizkraftwerks.

Vorteilhafterweise ist die Wärmepumpe mit in dem Stromspeicher gespeicherten Strom betreibbar. Gegebenenfalls erfolgt zuvor eine Umsetzung des gespeicherten Stroms unter Verwendung des Wechselrichters.

Vorzugsweise ist das Heizkraftwerk modular aufgebaut und weist folgende Module auf: ein Blockheizkraftmodul, welches das Blockheizkraftwerk enthält, ein Wärmepumpenmodul, welches die Wärmepumpe enthält, ein Elektrikmodul, welches den Stromspeicher enthält, sowie ein Steuerungsmodul, welches eine Steuerung des Heizkraftwerks enthält und mittels Steuerleitungen mit dem Wärmepumpenmodul, dem Blockheizkraftmodul und dem Elektrikmodul verbunden ist. Sofern ein Wechselrichter vorgesehen ist, ist dieser vorzugsweise in dem Elektrikmodul angeordnet. Die modulare Bauweise hat sich in der Praxis bewährt und vereinfacht Transport, Aufbau- sowie Wartungsarbeiten.

Vorzugsweise ist ein Wärmespeicher vorgesehen, in welchem Wärme aus einem Kühlkreislauf des Blockheizkraftwerks sowie mittels der Wärmepumpe erzeugte Wärme speicherbar ist. In Kombination mit dem Stromspeicher ermöglicht es der Wärmespeicher, den Betrieb des Heizkraftwerks zu optimieren. Die Optimierung kann dabei nach Wahl im Hinblick auf Energieeffizienz, Verschleiß oder Wartungsintensität erfolgen. Besonders bevorzugt ist der Wärmespeicher als Schichtenleitspeicher ausgeführt.

Vorteilhafterweise weist das Heizkraftwerk einen Abgaswärmetauscher auf, mittels welchem in Abgasen des Blockheizkraftwerks enthaltene Wärme auf ein Wärmeträgermedium übertragbar ist, wobei die auf das Wärmeträgermedium übertragene Wärme mittels des Wärmeträgermediums zumindest teilweise dem Wärmespeicher zuführbar ist. Auf diese Weise kann im Idealfall ein Gesamtwirkungsgrad von 100 Prozent des eingesetzten Brennstoffs, beispielsweise Erdgases, realisiert werden. Ein Raum, in welchem das Heizkraftwerk aufgestellt ist, erwärmt sich sodann nicht. Dies ist insbesondere dann realisierbar, wenn Wasserstoff als Energieträger im Blockheizkraftwerk verwendet wird. Lässt man die Gewinnung von Wärme aus der Umgebung mittels der Wärmepumpe in die Wirkungsgradberechnung einfließen, so können bei Verwendung des Abgaswärmetauschers 180 Prozent der eingesetzten Brennenergie als Strom bzw. Wärme bereitgestellt werden. Ist zudem eine Photovoltaikanlage vorgesehen, und lässt man die Stromerzeugung mittels dieser Photovoltaikanlage in die Berechnung einfließen, so können ca. 360 Prozent der eingesetzten Brennstoffenergie als Strom oder Wärme bereitgestellt werden.

Bei einer vorteilhaften Ausgestaltungsvariante ist in einem Verdampfer der Wärmepumpe abgekühlte Luft dem Blockheizkraftwerk als Ansaugluft zuführbar. Unter Ansaugluft im vorliegenden Sinne ist dabei die Luft zu verstehen, die an einem in dem Motor des Blockheizkraftwerks ablaufenden Prozess der Umsetzung eines Energieträgers, insbesondere einem Verbrennungsprozess, teilnimmt und dem Blockheizkraftwerk zu diesem Zweck zugeführt wird. Die Effizienz von in dem Blockheizkraftwerk ablaufenden Umsetzungsprozessen, insbesondere Verbrennungsprozessen, kann auf diese Weise erhöht werden. Zudem kann bei aufgeladenen Motoren eine Ladeluftkühlung realisiert werden. Alternativ besteht die Möglichkeit, die Ansaugluft unter Verwendung eines Wärmetauschers mittels der in dem Verdampfer abgekühlten Luft zu kühlen.

Das erfindungsgemäße Verfahren zum Betrieb eines Heizkraftwerks sieht vor, das von einem Blockheizkraftwerk an die Umgebung abgegebene Abwärme mit einer Temperatur von weniger als 40°Celsius als Wärmequelle einem Verdampfer einer Wärmepumpe zugeführt wird.

Auf diese Weise kann das Heizkraftwerk besonders effizient betrieben werden. Die Wärmepumpe kann im Gebäudeinnern aufgestellt werden, sodass im Außenbereich keine Betriebsgeräusche entstehen.

Vorzugsweise wird dem Verdampfer von dem Blockheizkraftwerk an die Umgebung abgegebene Abwärme mit einer Temperatur von weniger als 40°Celsius als Wärmequelle zugeführt. Dies ermöglicht eine besonders effiziente Verfahrensführung.

Bei einer vorteilhaften Verfahrensvariante wird das Blockheizkraftwerk mittels eines Kühlkreislaufs gekühlt und auf diese Weise abgeführte Wärme einem Wärmespeicher zugeführt oder es wird Wärme aus Abgasen des Blockheizkraftwerks aufgenommen und dem Wärmespeicher zugeführt. In beiden Fällen kann die Effizienz des Heizkraftwerks verbessert werden. Besonders bevorzugt wird daher das Blockheizkraftwerk mittels des Kühlkreislaufs gekühlt und auf diese Weise abgeführte Wärme dem Wärmespeicher zugeführt und darüber hinaus die Wärme aus den Abgasen des Blockheizkraftwerks aufgenommen und dem Wärmespeicher zugeführt.

Bei einer vorteilhaften Verfahrensvariante wird das Blockheizkraftwerk vor dessen Start vorgewärmt. Dies erfolgt, indem ein in seinem Kühlkreislauf enthaltenes Kühlmedium erwärmt und durch das Blockheizkraftwerk geleitet wird. Auf diese Weise werden Kaltstarts vermieden und die Verfahrenseffizienz verbessert. Zum Zwecke des Erwärmens des Kühlmediums wird vorzugsweise Wärme aus dem Wärmespeicher auf das Kühlmedium übertragen.

Vorteilhafterweise wird in dem Verdampfer der Wärmepumpe abgekühlte Luft dem Blockheizkraftwerk als Ansaugluft zugeführt. Der Begriff der Ansaugluft ist dabei in der oben erläuterten Weise zu verstehen. Mittels dieser Verfahrensweise kann die Effizienz des Blockheizkraftwerks verbessert und eine Ladeluftkühlung realisiert werden.

Vorteilhafterweise wird anhand von Wetterprognosen ein zu erwartender Strom- und/oder Wärmebedarf ermittelt. In Abhängigkeit von den ermittelten Strom- und/oder Wärmebedarfen wird sodann zumindest ein Prozess aus einer Gruppe durchgeführt, welche besteht aus einem Aufladen eines Stromspeichers, einem Aufladen eines Wärmespeichers und einem Vorbereiten eines Starts des Blockheizkraftwerks. Auf diese Weise kann das Heizkraftwerk besonders effizient und vorausschauend betrieben werden. So wird beispielsweise bei einer vorhergesagten Kaltfront der Wärmespeicher aufgeladen. Bei vorhergesagtem Regen hingegen erfolgt ein Aufladen des Stromspeichers aufgrund des vorhersehbaren Ertragsausfalls der Photovoltaikanlage bei einsetzendem Regen. Vorzugsweise werden weitere Informationen für die Ermittlung der zu erwartenden Strom- und/oder Wärmebedarfe eingesetzt. Beispielsweise kann zu diesem Zweck in vorteilhafter Weise auf Verhaltensmuster der Nutzer zurückgegriffen werden. Zur Erfassung und Auswertung dieser Verhaltensmuster können Algorithmen des selbstständigen Lernens in dem Heizkraftwerk und seiner Steuerung implementiert werden. Weiterhin können zukünftige, vorhersehbare Verbrauchsdaten von Geräten wie Waschmaschinen, Spülmaschinen oder anderen berücksichtigt werden. Ferner können bei der Durchführung der oben genannten Prozesse und der Entscheidung, welcher dieser Prozesse durchgeführt wird, Preisdaten des Energiemarktes, insbesondere das Vorliegen positiver oder negativer Strompreise, berücksichtigt werden. Dies ist für die oben beschriebene Teilnahme am Regelenergiemarkt vorteilhaft. Das Vorbereiten eines Starts des Blockheizkraftwerks kann, unter anderem, das Vorwärmen des Blockheizkraftwerks vor dessen Start umfassen.

Zum Zwecke der Ermittlung zu erwartender Strom- und/oder Wärmebedarfe kann das Heizkraftwerk in vorteilhafter Weise mit intelligenter Gebäudetechnik, welche teilweise als Smart-Grid bezeichnet wird, kommunizieren. Auf diese Weise können komfortabel zu erwartende Verbrauchsdaten wie beispielsweise Stromanforderungen von Spülmaschinen oder Waschmaschinen erhalten werden. Zudem können Schnittstellen für Fernzugriffe auf das Heizkraftwerk und dessen Steuerung bereitgestellt werden.

Das erfindungsgemäße Verfahren und dessen Weiterbildungen kann vorteilhaft zum Betrieb des erfindungsgemäßen Heizkraftwerks verwendet werden.

Im Weiteren wird die Erfindung anhand von Figuren näher erläutert. Soweit zweckdienlich, sind hierin gleichwirkende Elemente mit gleichen Bezugszeichen versehen. Die Erfindung ist nicht auf die in den Figuren dargestellten Ausführungsbeispiele beschränkt - auch nicht in Bezug auf funktionale Merkmale. Die bisherige Beschreibung wie auch die nachfolgende Figurenbeschreibung enthalten zahlreiche Merkmale, die in den abhängigen Unteransprüchen teilweise zu mehreren zusammengefasst wiedergegeben sind. Diese Merkmale wie auch alle übrigen oben und in der nachfolgenden Figurenbeschreibung offenbarten Merkmale wird der Fachmann jedoch auch einzeln betrachten und zu sinnvollen weiteren Kombinationen zusammenfügen. Insbesondere sind alle genannten Merkmale jeweils einzeln und in beliebiger geeigneter Kombination mit dem Verfahren und/oder dem Heizkraftwerk der unabhängigen Ansprüche kombinierbar. Es zeigen:
- Figur 1: Prinzipdarstellung eines ersten Ausführungsbeispiels des erfindungsgemäßen Heizkraftwerks sowie des erfindungsgemäßen Verfahrens;
- Figur 2: Prinzipdarstellung der elektrischen Verschaltung des Heizkraftwerks aus dem Ausführungsbeispiel der Figur 1;
- Figur 3: Fließdiagramm zu dem Ausführungsbeispiel der Figur 1;
- Figur 4: schematische Darstellung einer in dem Ausführungsbeispiel der Figuren 1 bis 3 verwendbaren gekoppelten Freikolben-Lineareinheit.

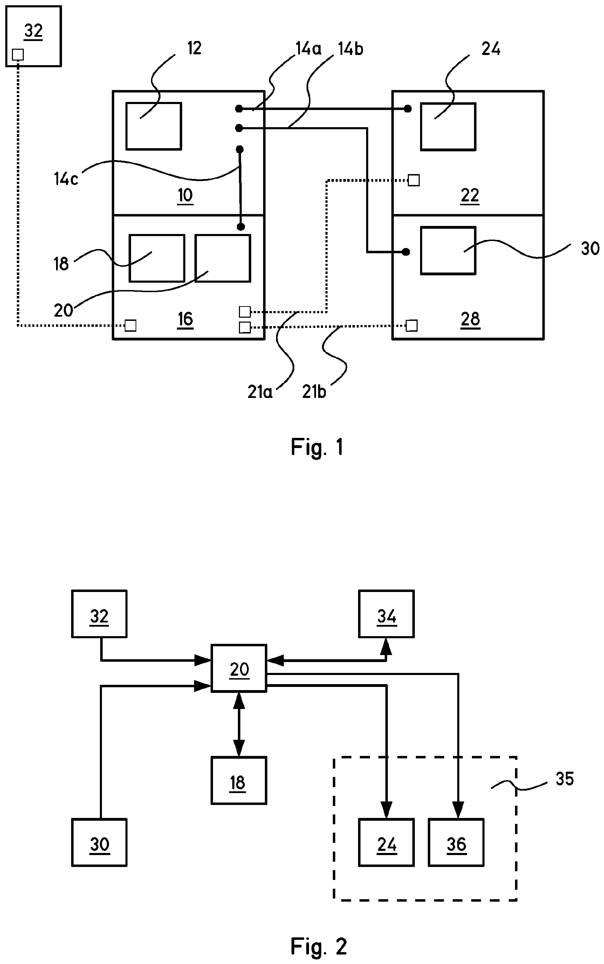

Figur 1 illustriert in einer Prinzipdarstellung ein erstes Ausführungsbeispiel des erfindungsgemäßen Heizkraftwerks wie auch des erfindungsgemäßen Verfahrens. Das in Figur 1 dargestellte Heizkraftwerk ist modular aufgebaut und weist ein Blockheizkraftmodul 28 auf, in welchem ein Blockheizkraftwerk 30 angeordnet ist. In vertikaler Richtung über dem Blockheizkraftwerk 30 ist das Wärmepumpenmodul 22 angeordnet, welches eine Wärmepumpe 24 enthält. Weiterhin ist ein Elektrikmodul 16 vorgesehen, welches einen Stromspeicher 18 sowie einen Wechselrichter 20 enthält. Über dem Elektrikmodul 16 ist ein Steuerungsmodul 10 angeordnet, welches eine Steuerung 12 des Heizkraftwerks enthält. Das Steuerungsmodul 10, und somit die Steuerung 12, sind mittels Steuerleitungen 14a, 14b, 14c mit dem Elektrikmodul 16, dem Wärmepumpenmodul 22 und dem Blockheizkraftmodul 28 verbunden. Infolgedessen sind das Elektrikmodul 16, das Wärmepumpenmodul 22 und das Blockheizkraftmodul 28 sowie die darin jeweils enthaltenen Bestandteile mittels der Steuerung 12 ansteuerbar.

Als zusätzliche Stromerzeugungsvorrichtung ist bei dem Ausführungsbeispiel der Figur 1 eine Photovoltaikanlage 32 vorgesehen, welche mittels einer Stromleitung 33 mit dem Elektrikmodul 16 verbunden ist. Über interne, der besseren Übersichtlichkeit halber in Figur 1 nicht dargestellten Schalt- und Verbindungsvorrichtungen ist die Photovoltaikanlage innerhalb des Elektrikmoduls 16 mit dem Wechselrichter 20 verbindbar. Weiterhin ist die Photovoltaikanlage mit dem Stromspeicher 18 verbindbar. Ebenso ist das Blockheizkraftwerk 30, genauer ein Generator 60 des Blockheizkraftwerks 30, mit dem Stromspeicher 18 über die Starkstromleitung 21b verbindbar. Somit ist der mittels des Blockheizkraftwerks 30 erzeugte Strom in dem Stromspeicher 18 speicherbar. Ferner ist der mittels der Photovoltaikanlage 32 erzeugte Strom in dem Stromspeicher 18 speicherbar.

Die Wärmepumpe 24 ist mit dem in dem Stromspeicher 18 gespeicherten Strom betreibbar. Zu diesem Zweck kann der Wärmepumpe 24 Strom über die Starkstromleitung 21a zugeführt werden, wobei es sich bei dem zugeführten Strom nicht zwingend um Starkstrom handeln muss. Über die Starkstromleitung 21a kann grundsätzlich auch eine Netzspannung von 230 Volt oder anderes anliegen, insbesondere können nur ausgewählte Phasen der Starkstromleitung 21a benutzt werden. Auch eine Gleichstromübertragung ist realisierbar. Infolgedessen kann die Wärmepumpe 24 mit in dem Stromspeicher 18 gespeicherten Strom betrieben werden. Dieser kann zuvor mittels des Wechselrichters 20 in geeigneter Weise umgesetzt worden sein.

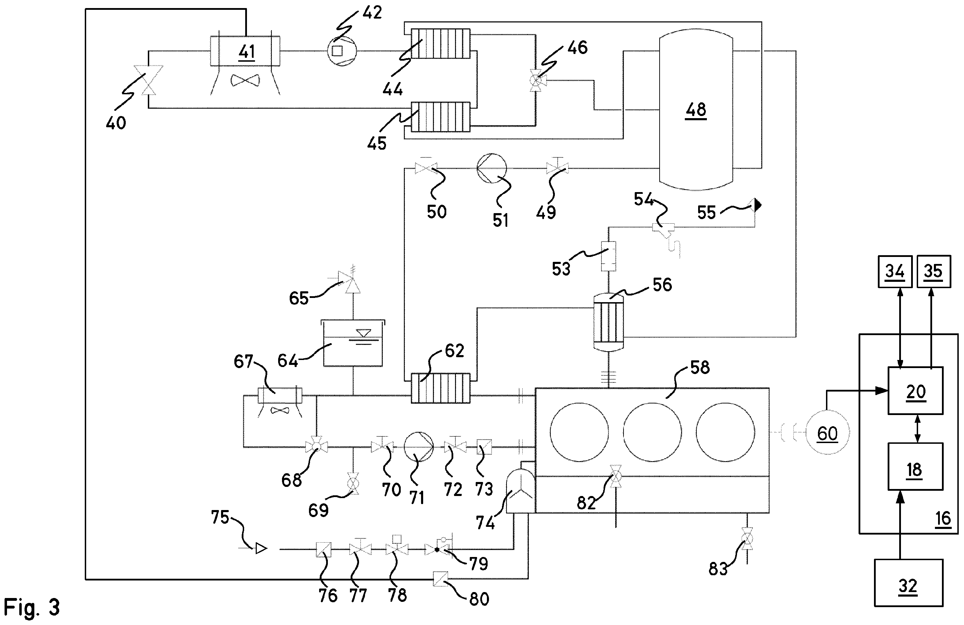

Ein Wärmespeicher ist in der Prinzipdarstellung der Figur 1 der besseren Übersichtlichkeit wegen nicht gezeigt, jedoch vorgesehen. Weitere Details zu dem Wärmespeicher sind in Figur 3 erkennbar und werden im Zusammenhang mit Figur 3 erläutert. Grundsätzlich kann auf den Wärmespeicher jedoch auch verzichtet werden.

Das Wärmepumpenmodul 22 sowie die darin enthaltene Wärmepumpe 24 ist bei dem Ausführungsbeispiel der Figur 1 in vertikaler Richtung über dem Blockheizkraftmodul 28 mit dem darin enthaltenen Blockheizkraftwerk 30 angeordnet. Nicht anderweitig nutzbare Niedrigtemperaturabwärme des Blockheizkraftwerks 30, welche von diesem an die Umgebungsluft abgeführt wird, kann infolgedessen, insbesondere durch Konvektion, an einen Verdampfer 41 der Wärmepumpe 24 gelangen und dort als Wärmequelle für die Wärmepumpe 24 genutzt werden.

Wesentliche Aspekte der elektrischen Verschaltung des Heizkraftwerks aus Figur 1 illustriert in einer schematischen Darstellung Figur 2. Wie dieser entnommen werden kann, nimmt der Wechselrichter 20 eine zentrale Rolle ein. Die Photovoltaikanlage 32 wie auch das Blockheizkraftwerk 30 sind über den Wechselrichter 20 mit einem externen Stromnetz 34 verbunden beziehungsweise in Abhängigkeit von der Ansteuerung des Heizkraftwerks mit diesem externen Stromnetz 34 verbindbar. Wie oben dargelegt wurde, kann infolgedessen auf eine aufwändige Netzsynchronisation des Blockheizkraftwerks 30 verzichtet werden. Der Wechselrichter 20 ist seinerseits bidirektional mit dem Stromspeicher 18 verbunden, sodass diesem Strom zugeführt wie auch entnommen werden kann. Über den Wechselrichter 20 können der Wärmepumpe 24 oder anderen gebäudeinternen Stromverbrauchern 36 Strom zugeführt werden. Dieser Zweig kann somit auch als internes Stromnetz 35 betrachtet werden, welches in der Darstellung der Figur 2 durch einen gestrichelten Kasten dargestellt ist. Das Heizkraftwerk ist somit über den Wechselrichter 20 mit einem internen Stromnetz 35 und einem externen Stromnetz 34 verbindbar. Die Verbindung mit dem externen Stromnetz 34 ist bidirektional ausgelegt, sodass auch Strom aus dem externen Stromnetz 34 bezogen werden kann.

Weitere Details des Heizkraftwerks aus Figur 1 sind in dem Fließschema der Figur 3 dargestellt. So zeigt Figur 3 einen Motor 58 des Blockheizkraftwerks 30, welcher mit dem Generator 60 des Blockheizkraftwerks 30 in Wirkverbindung steht. Über den Generator 60 wird die Stromzufuhr zu dem Wechselrichter 20 realisiert. Der Generator 60 kann als Startvorrichtung für den Motor 58 verwendet werden. Der Generator kann beispielsweise als Synchrongenerator oder als Asynchrongenerator ausgeführt sein. Bei dem Motor 58 handelt es sich um einen Gasmotor, welchem über eine Erdgaszufuhr 75 Erdgas zugeführt wird. In einem Zufuhrweg für das Erdgas sind ein Erdgasfilter 76, ein manuelles Ventil 77, ein Sicherheitsventil 78 sowie ein Reduktionsventil 79 angeordnet. Im Weiteren gelangt das zugeführte Erdgas in einen Gasmischer 74, in welchem es mit Ansaugluft gemischt wird, welche zuvor einen Luftfilter 80 durchströmt hat. Bei der dem Gasmischer zugeführten Ansaugluft handelt es sich um Luft, welche in dem Verdampfer 41 der Wärmepumpe 24 abgekühlt worden ist. Wie oben dargelegt wurde, kann auf diese Weise die Effizienz des Blockheizkraftwerks 30 gesteigert werden. Der Motor 58 ist mit Drainageventilen 82, 83 für Kühlwasser und Motoröl versehen.

Der Motor 58 wird mittels eines Kühlkreislaufes gekühlt. Zu diesem Zweck wird mittels einer Pumpe 71 ein Kühlmedium durch den Kühlkreislauf gepumpt. Neben manuellen Ventilen 70, 72 sind in dem Kühlkreislauf 73 eine Filtervorrichtung 73, ein Dreiwegeventil 68 sowie ein Drainageventil 69 angeordnet. Weiterhin sind in dem Kühlkreislauf ein Ausgleichsbehälter 64 für das Kühlmedium sowie ein mit dem Ausgleichsbehälter 64 verbundenes Überdruckventil 65 angeordnet.

Die Abfuhr von Wärme aus dem Kühlmedium erfolgt mittels eines von dem Kühlmedium durchströmten Wärmetauschers 62. Lediglich für den Fall, dass eine hinreichende Wärmeabfuhr über den Wärmetauscher 62 nicht bewerkstelligt werden kann, ist eine Notkühlvorrichtung 67 vorgesehen. Mittels des Wärmetauschers 62 wird aus dem Kühlkreislauf abgeführte Wärme auf ein Wärmeträgermedium überführt, welches mittels einer Pumpe 51 durch den Wärmetauscher 62 gepumpt wird. Ein Wärmeübergang in die entgegengesetzte Richtung, das heißt auf das Kühlmedium, ist möglich und erfolgt zum Zwecke des Vorwärmens des Blockheizkraftwerks vor dessen Start. Ist hingegen das Blockheizkraftwerk 30 in Betrieb, wird dieses mittels des Kühlkreislaufes gekühlt und die über den Wärmetauscher 62 abgeführte Wärme einem in Figur 3 dargestellten Wärmespeicher 48 zugeführt. Dies erfolgt mittels des Wärmeträgermediums, welches von der Pumpe 51 angetrieben neben dem Wärmetauscher 62 auch einen Abgaswärmetauscher 56 durchströmt, mittels welchem in Abgasen des Blockheizkraftwerks 30 enthaltene Wärme auf das Wärmeträgermedium übertragbar ist und im Weiteren dem Wärmespeicher 48 zugeführt werden kann. Nach Durchströmen des Abgaswärmetauschers 56 durchströmt das Abgas einen Schalldämpfer 53 und wird einem Abgasauslass 55 zugeführt, vor welchem noch ein Kondensatablauf 54 angeordnet ist. In Strömungsrichtung des Wärmeträgermediums vor und nach der Pumpe 51 sind manuelle Ventile 49, 50 angeordnet.

In dem Wärmespeicher 48, welcher vorzugsweise als Schichtenleitspeicher ausgeführt ist, ist somit dem Kühlkreislauf des Blockheizkraftwerks 30 entnommene Wärme speicherbar. Weiterhin kann dem Wärmespeicher 48 mittels der Wärmepumpe erzeugte Wärme zugeführt werden. Diese mittels der Wärmepumpe 24 erzeugte Wärme wird in an sich bekannter Weise über einen ersten Kondensator 44 und einen zweiten Kondensator 45 von einem Wärmepumpenkreis, in welchem neben dem Verdampfer 41 ein Kompressor 42 und ein Expansionsventil 40 angeordnet sind, auf das Wärmeträgermedium übertragen. Dieses wird sodann über ein Dreiwegeventil 46 dem Wärmespeicher 48 zugeführt, sodass die mittels der Wärmepumpe 24 erzeugte Wärme ebenfalls in dem Wärmespeicher 48 speicherbar ist.

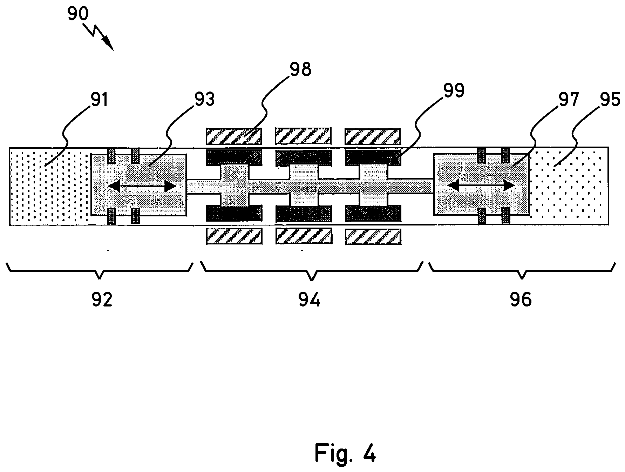

Figur 4 zeigt in einer schematischen Darstellung eine gekoppelte Freikolben-Lineareinheit 90. Diese gliedert sich in drei Bereiche: einen Verbrennungsbereich 92, in welchem ein Brennstoff 91, im Fall des Ausführungsbeispiels der Figur 3 Erdgas, verbrannt wird. Die dabei frei werdenden Kräfte bewirken eine Bewegung des ersten Kolbens 93 in der Darstellung der Figur 4 nach rechts und infolgedessen in einem Kompressorbereich 96 eine mittels eines zweiten Kolbens 97 realisierte Kompression eines Wärmepumpenmediums 95. Unter dem Wärmepumpenmedium 95 ist dabei ein im Wärmepumpenkreis umgewälztes Wärmeträgermedium zu verstehen.

Zwischen dem Verbrennungsbereich 92 und dem Kompressorbereich 96 befindet sich ein Generatorbereich 94, in welchem eine Statorvorrichtung 98 angeordnet ist. Infolge der durch Pfeile angedeuteten Bewegung der ersten und zweiten Kolben 93, 97 wird die mit den Kolben 93, 97 verbundene Läufervorrichtung 99 relativ zur Statorvorrichtung 98 bewegt und eine elektrische Spannung induziert.

Die gekoppelte Freikolben-Lineareinheit 90 kann als Generator oder als Motor betrieben werden. Insbesondere kann sie bei dem Ausführungsbeispiel der Figur 3 eingesetzt werden, wobei der Verbrennungsbereich 92 sodann den Motor 58 ersetzt, der Generatorbereich 94 den Generator 60 und der Kompressorbereich 96 den Kompressor 42.

### Bezugszeichenliste

- 10: Steuerungsmodul
- 12: Steuerung
- 14a: Steuerleitung
- 14b: Steuerleitung
- 14c: Steuerleitung
- 16: Elektrikmodul
- 18: Stromspeicher
- 20: Wechselrichter
- 21a: Starkstromleitung
- 21b: Starkstromleitung
- 22: Wärmepumpenmodul
- 24: Wärmepumpe
- 28: Blockheizkraftmodul
- 30: Blockheizkraftwerk
- 32: Photovoltaikanlage
- 33: Stromleitung
- 34: externes Stromnetz
- 35: internes Stromnetz
- 36: Stromverbraucher
- 40: Expansionsventil
- 41: Verdampfer
- 42: Kompressor
- 44: erster Kondensator
- 45: zweiter Kondensator
- 46: Dreiwegeventil
- 48: Wärmespeicher
- 49: manuelles Ventil
- 50: manuelles Ventil
- 51: Pumpe
- 53: Schalldämpfer
- 54: Kondensatablauf
- 55: Abgasauslass
- 56: Abgaswärmetauscher
- 58: Motor
- 60: Generator
- 62: Wärmetauscher
- 64: Ausgleichsbehälter
- 65: Überdruckventil
- 67: Notkühlvorrichtung
- 68: Dreiwegeventil
- 69: Drainageventil
- 70: manuelles Ventil
- 71: Pumpe
- 72: manuelles Ventil
- 73: Filtervorrichtung
- 74: Gasmischer
- 75: Erdgaszufuhr
- 76: Erdgasfilter
- 77: manuelles Ventil
- 78: Sicherheitsventil
- 79: Reduktionsventil
- 80: Luftfilter
- 82: Drainageventil Kühlwasser
- 83: Drainageventil Motoröl
- 90: gekoppelte Freikolben-Lineareinheit
- 91: Brennstoff
- 92: Verbrennungsbereich
- 93: erster Kolben
- 94: Generatorbereich
- 95: Wärmepumpenmedium
- 96: Kompressorbereich
- 97: zweiter Kolben
- 98: Statorvorrichtung
- 99: Läufervorrichtung

## Patentansprüche

1. Heizkraftwerk aufweisend
- ein Blockheizkraftwerk (30);
- eine Wärmepumpe (24);
**gekennzeichnet durch**
- einen Stromspeicher (18), in welchem der mittels des Blockheizkraftwerks (30) erzeugte Strom speicherbar ist.

2. Heizkraftwerk nach Anspruch 1,
**dadurch gekennzeichnet,**
**dass** ein Verdampfer (41) der Wärmepumpe (24) thermisch an eine Umgebungsluft des Heizkraftwerks gekoppelt ist, sodass von dem Blockheizkraftwerk (30) an die Umgebungsluft abgeführte Abwärme des Blockheizkraftwerks als Wärmequelle für die Wärmepumpe (24) nutzbar ist.

3. Heizkraftwerk nach einem der vorangegangenen Ansprüche,
**dadurch gekennzeichnet,**
**dass** ein Wechselrichter (20) vorgesehen ist, über welchen das Heizkraftwerk mit einem internen Stromnetz (35) und/oder einem externen Stromnetz (34) verbindbar ist.

4. Heizkraftwerk nach Anspruch 3,
**dadurch gekennzeichnet,**
**dass** eine zusätzliche Stromerzeugungsvorrichtung (32), vorzugsweise eine Photovoltaikanlage (32), mit dem Wechselrichter (20) verbunden ist.

5. Heizkraftwerk nach Anspruch 4,
**dadurch gekennzeichnet,**
**dass** mittels der zusätzlichen Stromerzeugungsvorrichtung (32) erzeugter Strom in dem Stromspeicher (18) speicherbar ist.

6. Heizkraftwerk nach einem der vorangegangenen Ansprüche,
**dadurch gekennzeichnet,**
**dass** die Wärmepumpe (24) mit in dem Stromspeicher (18) gespeichertem Strom betreibbar ist.

7. Heizkraftwerk nach einem der vorangegangenen Ansprüche,
**dadurch gekennzeichnet,**
**dass** das Heizkraftwerk modular aufgebaut ist und folgende Module aufweist:
- ein Blockheizkraftmodul (28), welches das Blockheizkraftwerk (30) enthält;
- ein Wärmepumpenmodul (22), welches die Wärmepumpe (24) enthält;
- ein Elektrikmodul (16), welches den Stromspeicher (18) enthält, wobei ein etwaiger vorhandener Wechselrichter (20) vorzugsweise ebenfalls in dem Elektrikmodul (16) angeordnet ist;
- ein Steuerungsmodul (10), welches eine Steuerung (12) des Heizkraftwerks enthält und mittels Steuerleitungen (14a, 14b, 14c) mit dem Wärmepumpenmodul (22), dem Blockheizkraftmodul (28) und dem Elektrikmodul (16) verbunden ist.

8. Heizkraftwerk nach einem der vorangegangenen Ansprüche
**gekennzeichnet durch**
einen Wärmespeicher (48), in welchem Wärme aus einem Kühlkreislauf des Blockheizkraftwerks (30) sowie mittels der Wärmepumpe (24) erzeugte Wärme speicherbar ist, wobei der Wärmespeicher (48) vorzugsweise als Schichtenleitspeicher ausgeführt ist.

9. Heizkraftwerk nach einem der vorangegangenen Ansprüche,
**dadurch gekennzeichnet,**
**dass** in einem Verdampfer (41) der Wärmepumpe (24) abgekühlte Luft dem Blockheizkraftwerk (30) als Ansaugluft zuführbar ist.

10. Verfahren zum Betrieb eines Heizkraftwerks, bei welchem von einem Blockheizkraftwerk (30) an die Umgebung abgegebene Abwärme mit einer Temperatur von weniger als 40°C als Wärmequelle einem Verdampfer (41) einer Wärmepumpe (24) zugeführt wird.

11. Verfahren nach Anspruch 10,
**dadurch gekennzeichnet, dass**
- das Blockheizkraftwerk (30) mittels eines Kühlkreislaufs gekühlt wird und auf diese Weise abgeführte Wärme einem Wärmespeicher (48) zugeführt wird und
- Wärme aus Abgasen des Blockheizkraftwerks (30) aufgenommen und dem Wärmespeicher (48) zugeführt wird.

12. Verfahren nach einem der Ansprüche 10 bis 11,
**dadurch gekennzeichnet,**
**dass** das Blockheizkraftwerk (30) vor dessen Start vorgewärmt wird, indem ein in seinem Kühlkreislauf enthaltenes Kühlmedium erwärmt und durch das Blockheizkraftwerk (30) geleitet wird.

13. Verfahren nach einem der Ansprüche 10 bis 12,
**dadurch gekennzeichnet,**
**dass** in dem Verdampfer (41) der Wärmepumpe (24) abgekühlte Luft dem Blockheizkraftwerk (30) als Ansaugluft zugeführt wird.

14. Verfahren nach einem der Ansprüche 10 bis 13,
**dadurch gekennzeichnet,**
anhand von Wetterprognosen ein zu erwartender Strom- und/oder Wärmebedarf ermittelt wird und in Abhängigkeit von den ermittelten Strom- und/oder Wärmebedarfe zumindest ein Prozess durchgeführt wird aus einer Gruppe bestehend aus Aufladen eines Stromspeichers (18), Aufladen eines Wärmespeichers (48) und Vorbereiten eines Starts des Blockheizkraftwerks (30).

15. Verfahren nach einem der Ansprüche 10 bis 14,
**dadurch gekennzeichnet,**
**dass** das Verfahren verwendet wird zum Betrieb eines Heizkraftwerks nach einem der Ansprüche 1 bis 9.
